# NEW EUROPEAN PATENT SPECIFICATION

(11) **EP 1 583 722 B2**
(45) Date of publication and mention of the opposition decision: **13.05.2020**
(45) Mention of the grant of the patent: 06.03.2013
(21) Application number: 03797022.5
(22) Date of filing: 17.12.2003
(51) Int. Cl.: C03C 17/36, C03C 27/12

(54) **COATED ARTICLE WITH REDUCED COLOR SHIFT AT HIGH VIEWING ANGLES**
BESCHICHTETE FORMKÖRPER MIT REDUZIERTER FARBSCHIEBUNG UNTER HOHEN BETRACHTUNGSWINKEL
ARTICLE REVETU A DECALAGE DE COULEUR REDUIT AU NIVEAU D'ANGLES DE VISUALISATION

(30) Priority: 20.12.2002 US 324145
(43) Date of publication of application: 12.10.2005
(73) Proprietor: Guardian Glass, LLC, Auburn Hills MI 48326 (US)
(72) Inventor: LAIRD, Ronald, E., Dexter, MI 48130 (US)
(74) Representative: Hoyng Rokh Monegier LLP
(86) International application number: PCT/US2003/039939
(87) International publication number: WO 2004/058660

(56) References cited:
- WO-A-02/04375
- FR-A- 2 821 349
- US-A1- 2004 005 467
- US-B1- 6 572 940

## Description

### BACKGROUND OF THE INVENTION

Windows including glass substrates with solar control coatings provided thereon are known in the art. Such windows may be used in the context of architectural windows, automotive windows, and/or the like.

Commercial architectural applications often require that certain windows in a building be heat treated (HT) (e.g., thermally tempered) while others need not be. Given that some buildings thus require the use of both heat treated (HT) and non-HT windows, it will be appreciated by those skilled in the art that there sometimes exists a need in the art to approximately color match HT and non-HT windows in the same building. Color matching is often thought of in terms of a normal viewing angle (i.e., directly on-axis or 0 degree viewing angle looking straight at the window).

However, color at high viewing angles may also be important in certain applications. For example, high degrees of certain types of color shift upon a large change in viewing angle are often undesirable. Consider the conventional non-HT coated article discussed below, which has been commercially sold by the assignee of this application prior to the filing date hereof and includes the below-listed layers on a glass substrate proceeding from the glass substrate outwardly:

### Conventional Non-HT Coated Article

| Layer | Thickness |
|---|---|
| Glass Substrate | 1-10 mm |
| TiO₂ | 18 nm (180Å) |
| ZnOₓ | 10 nm (100Å) |
| Ag | 10,5 nm (105Å) |
| NiCrOₓ | 3 nm (30Å) |
| SnO₂ | 59,5 nm (595Å) |
| ZnOₓ | 12 nm (120Å) |
| Ag | 13 nm (130 Å) |
| NiCrOₓ | 3 nm (30 Å) |
| SnO₂ | 10 nm (100 Å) |
| Si3N₄ | 19,5 nm (19 Å); |

The aforesaid conventional non-HT coated article, has the following color characteristics at both a normal viewing angle (i.e., straight-on 0 degree viewing angle) and higher viewing angles (VA) such as 45 degrees and 60 degrees off-axis (measured monolithically).

**Table 1: Color Shift Characteristics of Article from Above**

| Color Characteristic | | 0 deg. VA | 45 deg. VA | 60 deg. VA |
|---|---|---|---|---|
| Glass Side Reflective | | | | |
| | a* | -0.7 | 2.11 | 2.9 |
| | b* | 0.62 | 0.16 | -0.73 |
| | L* | 26.93 | 31.39 | 44.97 |
| | Δa* g | n/a | 2.81 | 3.6 |

| Film Side Reflective | | | | |
|---|---|---|---|---|
| | a* | -2.86 | 2.88 | 4.2 |
| | b* | 1.43 | -0.51 | 4.2 |
| | L* | 24.7 | 29.68 | 44.29 |

It can be seen from the above that while the glass side b* color value is fairly stable upon viewing angle (VA) change from 0 to 60 degrees, the glass side a* color value realizes significant change/shift upon viewing angle change from 0 to 45 and/or 60 degrees (i.e., Δa* is high). Unfortunately, since Δa*g (glass side reflective) is rather high having a value of 3.6 given a viewing angle (VA) change of about 60 degrees, the color of the coated article (measured monolithically) becomes significantly more red upon this change in viewing angle. In other words, the glass side reflective a* value of 2.9 at the 60 degree VA is red in color, whereas the a* value of -0.7 at the 0 degree VA is fairly neutral. This change in color (i.e., becoming significantly more red) upon VA change from 0 to 60 degrees is undesirable - especially if one is trying to approximately color match another coated article that is not so red at such a high viewing angle.

Stated another way, the rather high Δa*g value of 3.6 due to a 60 degree viewing angle change is undesirable. This a* shift is further problematic for the coating described above since the a* value progressively moves further from neutral (i.e., becomes more red) as it moves toward the 60 degree VA value of 2.9. While.smaller Δa* values given such a viewing angle change have been achieved by others in the past, the same has not been achieved in the context of the aforesaid coating materials.

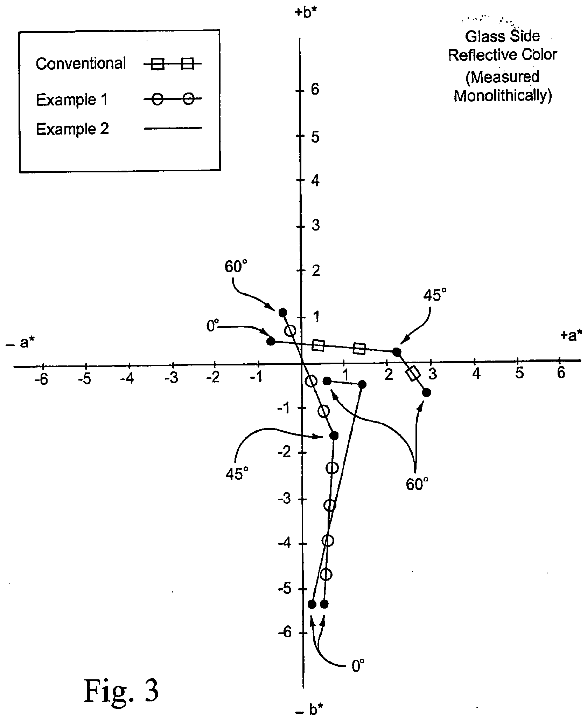

The undesirable glass side reflective a* color shift of the aforesaid coating is illustrated as the "conventional" coating in Fig. 3 (i.e., the line with the boxes). The significant lateral movement of the glass side reflective a* value shown in Fig. 3 is undesirable, especially since it moves progressively away from neutral as viewing angle increases to 60 degrees.
Document WO 02/04375 discloses a layer system comprising a base layer of TiO₂ and two silver layers, which are sandwiched by layers of or including nickel oxide or a nickel alloy oxide. According to this document, both silver layers have to be sandwiched with such contact layers and both contact layers have to be chosen from a Ni inclusive oxide.

Accordingly, it will be appreciated by those skilled in the art that there exists a need in the art for a coating which experiences less of a glass side reflective a* shift upon significant change in viewing angle (e.g., need for a smaller Δa*g value). For example, there may exist a need in the art for a coating that does not become as red as viewing angle increases to 60 degrees.

### BRIEF SUMMARY OF THE INVENTION

An object of this invention is to provide a coated article that experiences a Δ*g (glass side reflective) value of no greater than 3.0 given a viewing angle (VA) change from about 0 to 60 degrees. In certain example embodiments, this Δa*g value may be no greater than 2.5, even more preferably no greater than 2.0, more preferably no greater than 1.5, and sometimes no greater than 1.0. It is noted that the Δa*g values herein are measured monolithically, even though the coated articles may be used either monolithically or in the context of an insulating glass (IG) window unit or the like.

Another object of this invention is to provide a coated article that experiences a Δa*g (glass side reflective) value of no greater than 2.0 given a viewing angle (VA) change from about 0 to 45 degrees. In certain example embodiments, this Δa*g value may be no greater than 1.5, and even more preferably no greater than 1.0.

Another object of this invention is to provide a coated article having a glass side reflective a* color value that is more neutral (i.e., is closer to 0) at a 45 and/or 60 degree viewing angle, than at about a 0 degree viewing angle.

Surprisingly, it has been found that one or more of the aforesaid objects is achievable by thinning the titanium oxide layer located below the bottom silver layer in the aforesaid conventional coating. This thinning of the titanium oxide layer surprisingly results in stabilization of the glass side a* color value upon significant increase in viewing angle.

Another object of this invention is to fulfill one or more of the above-listed objects.
The above objects are solved by a coated article in accordance with claim 1.

### BRIEF DESCRIPTION OF THE DRAWINGS

FIGURE 1 is a cross sectional view of a coated article according to an example embodiment of this invention.

FIGURE 2 is a cross sectional view of the coated article of Fig. 1 being used in an IG window unit according to an example embodiment of this invention.

FIGURE 3 is an a* versus b* graph illustrating glass side color values upon significant viewing angle shifts for the conventional coating described above compared to Examples 1-2 of this invention which are set forth below.

### DETAILED DESCRIPTION OF THE INVENTION

Certain example embodiments of this invention relate to a coated article having a reduced glass side reflective a* color shift upon significant changes in view angle (VA). It is noted that glass side reflective a* values are measured herein monolithically, even though the final coated article may be monolithic or otherwise (e.g., IG window unit).

Surprisingly, it has been found that by thinning the bottom titanium oxide (TiOₓ. where 1 <= x <=3, or any other suitable stoichiometry) layer compared to the 18 nm (180 Å) thickness described in the coating above, glass side reflective a* color shift (i.e., Δa*g) can be significantly reduced. In embodiments of this invention, the titanium oxide layer is thinned from the 18 nm (180 Å) thickness referenced above to a thickness of from 4 to 15 nm (40 to 150 Å) more preferably from 5-12,5 nm (50 to 125 Å) and even more preferably from 76,11 nm (70 to 110 Å).

In certain example embodiments, such thinning of the titanium oxide layer enables the coated article to have color (a* and/or b*) that is more neutral at a high viewing angle such as 45 and/or 60 degrees off-axis, than at a normal (0 degrees on-axis) viewing angle. This is advantageous in that (a) the color of the coated article is less offensive at high viewing angles (i.e., a more neutral color at angle can be achieved), and/or (b) the off-axis color of the coating is easier to approximately match with other coatings. In certain example embodiments of this invention, the coated article has a glass side reflective a* value of from -1.5 to +1.5 (more preferably from -1.0 to +1.0) and a glass side reflective b* value from -1.5 to +1.5 (more preferably from -1.0 to +1.0) at a viewing angle of about 60 degrees, thereby achieving fairly neutral coloration at this high viewing angle.

In certain example embodiments of this invention, it has also been found that the respective thicknesses of the infrared (IR) reflecting layers (e.g., Ag layers) may also play a part in stabilizing a* values upon significant changes in viewing angle. In particular, making the upper IR reflecting layer thicker than the lower IR reflecting layer has been found to be helpful in this regard.

The use of the thin titanium oxide layer herein to stabilize a* values upon viewing angle change may be used in order to provide a coated article (e.g., non-HT) which colorwise approximately matches a HT counterpart coated article such as that described in U.S.6, 576, 349 (Serial No. 091794,224), both at normal viewing angles and at higher viewing angles such as 45 and 60 degrees off-axis.

Certain embodiments of this invention provide a low-E coating or layer system that may be used in applications such as insulating glass (IG) window units, vehicle windows, skylights, glass doors, and the like. Coated articles (e.g., monolithic or IG units) according to certain embodiments of this invention preferably have high visible transmission of at least 65% (e.g., when using clear glass substrates from 1.0 to 10 mm thick). In the example context of IG units, this high visible transmission is coupled with at least one of: (a) SHGC no greater than about 0.45, more preferably no greater than about 0.40; (b) a rather low Δa*g (glass side reflective) value, measured monolithically for the coated substrates(s), given a viewing angle (VA) change from about 0 to either 45 or 60 degrees; (c) fairly neutral transmissive color such that transmissive a* is from -6.0 to +5.0 (more preferably from -5 to -0), and transmissive b* is from -2.0 to 4.0 (more preferably from 1.0 to 3.0); and/or (d) fairly neutral reflective color from the exterior of the IG unit (i.e., Rg/Rₒᵤₜ) such that reflective a* (i.e., a*g) is from -5.0 to 2.0 (more preferably from -3.0 to 0.5), and reflective b* (i.e., b*g) is from -7.0 to 1.0 (more preferably from -5.0 to -1.0).

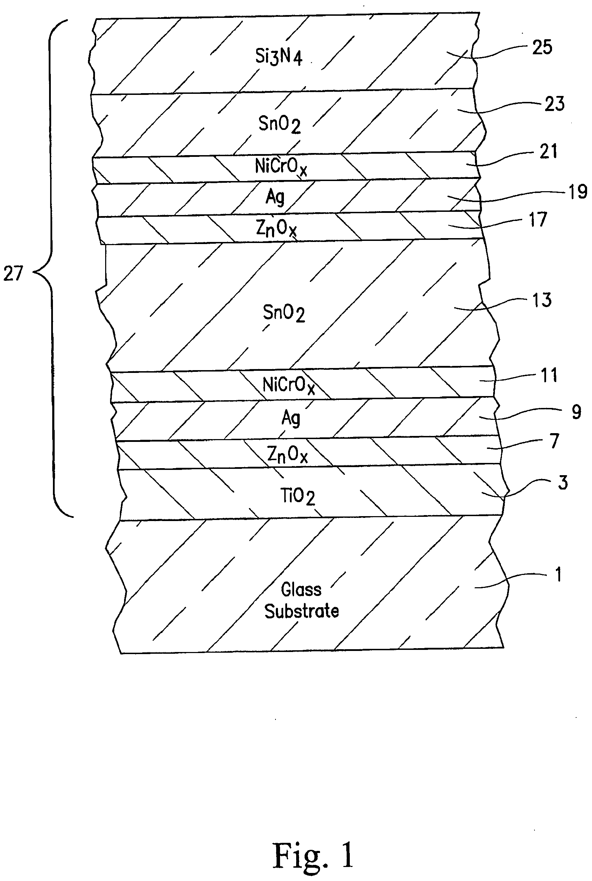

Figure 1 is a side cross sectional view of a coated article according to an example non-limiting embodiment of this invention. The coated article includes substrate 1 (e.g., clear, green, bronze, or blue-green glass substrate from about 1.0 to 10.0 mm thick, more preferably from about 1.0 mm to 3.5 mm thick), and coating (or layer system) 27 provided on the substrate 1 either directly or indirectly. The coating (or layer system) 27 includes: titanium oxide layer 3 (e.g., a first dielectric layer), first lower contact layer 7 (which contacts layer 9), first conductive and metallic infrared (IR) reflecting layer 9, first upper contact layer 11 (which contacts layer 9), second dielectric layer 13 (which may be deposited in one or multiple steps in different embodiments of this invention), second lower contact layer 17 (which contacts layer 19), second conductive and metallic IR reflecting layer 19, second upper contact layer 21 (which contacts layer 19), third dielectric layer 23, and finally fourth protective dielectric layer 25. The "contact" layers 7, 11, 17 and 21 each contact at least one IR reflecting layer (e.g., Ag layer). The aforesaid layers 3-25 make up low-E (i.e., low emissivity) coating 27 which is provided on glass or plastic substrate 1.

In the embodiments of this invention, the thickness of titanium oxide layer 3 is controlled so as to enable a reduced Δa*g value(s) given a viewing angle change of from about 0 to 45 and/or 60 degrees as explained above. In this respect, the low Δa*g values described herein are enabled by, *inter alia*, controlling the thickness of titanium oxide layer 3 so as to be from 4 to 15 nm (40 to 150 Å), more preferably from 5 to 12,5 nm (50 to 125 Å), and even more-preferably from 76.11 nm (70 to 110 Å) Surprisingly, this reduced thickness of the titanium oxide layer 3 compared to the coating described above in the Background section tends to stabilize the glass side reflective a* value upon significant viewing angle change so that the a* value does not becomes too red at high viewing angle(s).

Infrared (IR) reflecting layers 9 and 19 are preferably metallic and conductive, and are made of or include silver (Ag). However, metallic Ag is the material of choice for the IR reflecting layers 9 and 19 in the embodiments of this invention. These IR reflecting layers help enable coating 27 to have low-E and/or good solar control characteristics. The SIR reflecting layer(s) may be slightly oxidized in certain embodiments of this invention.

The upper contact layers 11 and 21 (i.e., "upper" means the contact layers on top of the respective IR reflective layers 9, 19) are of or include nickel chrome oxide (NiCrOₓ), in the embodiments of this invention. The use of NiCrOₓ for/in these layers enables durability to be improved, compared to the use of certain other materials (e.g., compared to zinc oxide). NiCrOₓ layers 11 and/or 21 may be fully oxidized in certain embodiments of this invention (i.e., fully stoichiometric), or may be at least about 50% oxidized in other embodiments of this invention. It is noted that upper contact layers 11 and/or 21 may or may not be continuous in different embodiments of this invention, depending upon their respective thickness(es). Upper contact layer(s) 11 and/or 21 of or including NiCrOₓ) may or may not be oxidation graded in different embodiments of this invention. Oxidation grading means that the degree of oxidation in the layer(s) changes throughout the thickness of the layer(s) so that for example a contact layer may be graded so as to be less oxidized at the contact interface with the immediately adjacent IR reflecting layer than at a portion of the contact layer(s) further or more/most distant from the immediately adjacent IR reflecting layer.

The lower contact layers 7 and 17 ("lower" means the contact layers on the underneath side of the IR reflecting layers 9, 19) are of or include zinc oxide (e.g., ZnOₓ, where x if from 0.6 to 1.2 in different embodiments, more preferably x is from 0.7 to 1.0) in preferred, but non-limiting, embodiments of this invention. For example, lower contact layer(s) 7 and/or 11 may consist essentially of zinc oxide in certain embodiments of this invention, while in other embodiments of this invention lower contact layer(s) 7 and/or 11 may include or consist essentially of ZnAlOₓ, where x is set to a value such that the %Al (by weight) in the layer is from about 0-15%, more preferably from about 0-6%, and most preferably from about 1-4.%. The use of these materials (e.g., ZnOₓ, ZnAlOₓ, or the like) for lower contact layer(s) 7 and/or 17 enables visible transmission of the resulting coated article to be increased (compared to if NiCrOₓ was used for these layers), enables sheet resistance Rₛ and/or emissivity to be reduced, and overall enables solar performance to be improved. In ZnOₓ inclusive contact layer(s) 7 and/or 17, x may be set so that the layer is fully stoichiometric (e.g., ZnO), or alternatively may be set to a value from 0.4 to 0.99, more preferably from 0.7 to 0.99, and most preferably from 0.8 to 0.99 so that the layer(s) is more conductive (e.g., this can be done by reducing the amount of oxygen gas and increasing the amount of Ar gas used during a sputter coating process). Additionally, in certain embodiments of this invention, layer(s) 7 and/or 17 have an index of refraction of from 1.8 to 2.2, more preferably from about 1.9 to 2.1, so that for example layers 3 and 7 clearly represent separate and distinct films.

It has been found that by using ZnOₓ, ZnAlOₓ, or the like for the lower contact layer(s) 7 and/or 17, while using NiCrOₓ for the upper contact layer(s) 11 and/or 21, the resulting coated article can achieve a combination of high visible transmission and reduced sheet resistance Rₛ, as well as acceptable durability (mechanical and/or chemical). The highly durable NiCrOₓ is used for the upper contact layers 11 and/or 21 for durability purposes, while the solar controlling ZnOₓ, ZnAlOₓ, or the like is used for the lower contact layer(s) 7 and/or 17 to improve visible transmission and/or other solar characteristics. In other words, the NiCrOₓ provides good durability, especially when on top of the Ag layers, and the zinc oxide inclusive contact layer(s) enable high visible transmission to be combined with low sheet resistance Rₛ and/or good solar performance.

Second dielectric layer 13 acts as a coupling layer between the two halves of the coating 27, and is of or includes tin oxide (e.g., SnO₂ or some non-stoichiometric form thereof) in certain embodiments of this invention.

Third and fourth dielectric layers 23 and 25 enable the environmental resistance of the coating 27 to be improved, and are also provided for color purposes. In certain example embodiments, dielectric layer 23 may be of or include tin oxide (e.g., SnO₂), although other materials may instead be used. Dielectric overcoat layer 25 are of or include silicon nitride (e.g., Si₃iN₄) in the embodiments of this invention.
Layer 23 may be omitted in certain example embodiments of this invention.

Other layer(s) below or above the illustrated coating 27 may also be provided. Thus, while the layer system or coating 27 is "on" or "supported by" substrate 1 (directly or indirectly), other layer(s) may be provided therebetween. Thus, for example, coating 27 of Fig. 1 may be considered "on" and "supported by" the substrate 1 even if other layer(s) are provided between layer 3 and substrate 1. Moreover, certain layers of coating 27 may be removed in certain embodiments, while others may be added in other embodiments of this invention without departing from the overall spirit of certain embodiments of this invention.

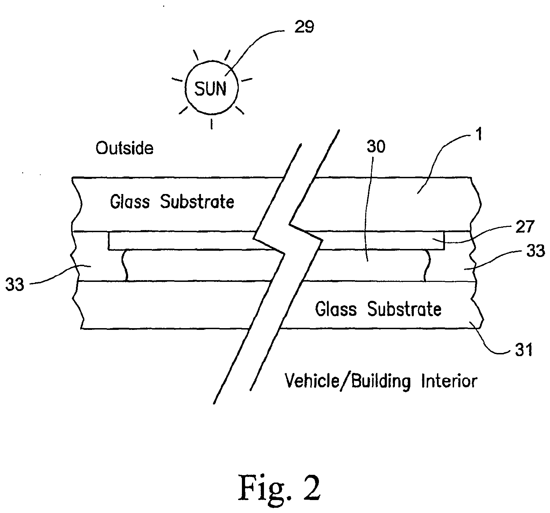

Figure 2 illustrates the coating or layer system 27 being utilized on surface #2 of an IG window unit. Coatings 27 according to any embodiment herein may be used in IG units as shown in Fig. 2. In order to differentiate the "inside" of the IG unit from its "outside", the sun 29 is schematically presented on the outside. The IG unit includes outside glass pane or sheet (i.e., substrate 1 from Fig. 1) and inside glass pane or sheet 31. These two glass substrates (e.g. float glass 1-10 mm thick) are sealed at their peripheral edges by a conventional sealant and/or spacer 33 and may be provided with a conventional desiccant strip (not shown). The panes may then be retained in a conventional window or door retaining frame. By sealing the peripheral edges of the glass sheets and replacing the air in insulating space (or chamber) 30 with a gas such as argon, a typical, high insulating value IG unit is formed. Optionally, insulating space 30 may be at a pressure less than atmospheric pressure in certain alternative embodiments (with or without a gas in space 30), although this of course is not necessary in all embodiments. While the inner side of substrate 1 is provided with coating 27 in Fig. 2, this invention is not so limiting (e.g., coating 27 may instead be provided on the interior surface of substrate 31 in other embodiments of this invention).

Turning back to Fig. 1, while various thicknesses may be used consistent with one or more of the objects discussed herein, exemplary preferred thicknesses and example materials for the respective layers on the glass substrate 1 in the Fig. 1-2 embodiment are as follows:

**Table 2 (Example Materials/Thicknesses; Fig.1 Embodiment)**

| Layer | Preferred Range | More Preferred | Example |
|---|---|---|---|
| TiO₂ (layer 3) | 4,0- 15,0 nm | 7,0-11,0 nm | 9,0 nm |
| ZnOₓ (layer 7) | 2,5-20,0 nm | 4,0-15,0 nm | 10,0 nm |
| Ag (layer 9) | 5,0-25,0 nm | 8,0-15,0 nm | 9,5 nm |
| NiCrOₓ (layer 11) | 0,5-10,0 nm | 1,5-6,0 nm | 3,0 nm |
| SnO₂ (layer 13) | 0-100 nm | 40,0-80,0 nm | 580, nm |
| ZnOₓ (layer 17) | 2,5-20,0 nm | 4,0-15,0 nm | 12,0 nm |
| Ag (layer 19) | 5,0-25,0 nm | 8,0-22,0 nm | 13,9 nm |
| NiCrOₓ (layer 21) | 5-10,0 nm | 1,5-6,0 nm | 3,0 nm |
| Sn02 (layer 23) | 0-50,0 nm | 7,0-20,0 nm | 10,0 nm |
| Si₃N₄ (layer 25) | 0-50,0 nm | 12,0-32,0 nm | 19, nm |

In certain exemplary embodiments of this invention, coating/layer systems 27 according to all embodiments above have the following low-E (low emissivity) characteristics set forth in Table 3 when provided in the context of an insulating glass (IG) window unit (see Fig. 2), absent any significant heat treatment such as tempering or heat bending. It is noted that in Table 3 the term Eₙ means normal emissivity/emittance.

**Table 3: Low-E Characteristics (no heat treatment)**

| Characteristic | General | More Preferred | Most Preferred |
|---|---|---|---|
| Rₛ (ohms/sq.): | <= 5.0 | <=3.5 | <=2.8 |
| Eₙ: | <= 0.07 | <= 0.04 | <= 0.03 |

Moreover, coated articles including coatings 27 according to certain exemplary embodiments of this invention have the following solar characteristics (e.g., when the coating(s) is provided on a clear soda lime silica glass substrate 1 from 1 to 10 mm thick) in monolithic form. In Table 4 below, R_{g}Y is visible reflection from the glass (g) side of the monolithic article, while R_{f}Y is visible reflection from the side of the monolithic article on which film (f) (i.e., coating 27) is located.

**Table 4: Monolithic Solar Characteristics**

| Characteristic | | General | More Preferred |
|---|---|---|---|
| Tᵥᵢₛ (or TY)(III. C, 2 deg.): | | >= 70% | >= 75% |
| | a*ₜ (Ill. C, 2°): | -6.0 to 0.0 | -5.0 to -1.5 |
| | b*ₜ (Ill. C, 2°): | -4.0 to 4.0 | 1.0 to 3.0 |
| R_{g}Y (Ill. C, 2 deg.): | | 1 to 10% | 3 to 7% |
| | a*_{g} (Ill. C, 2°): | -2.0 to 4.0 | -0.5 to 2.5 |
| | b*_{g} (Ill. C, 2°): | -7.0 to 1.0 | -6.0 to 0.0 |
| | Δa*_{g} (0 to 45° VA): | <= 2.0 | <= 1.5 |
| | Δa*_{g} (0 to 60° VA): | <= 2.5 | <= 1.5 |
| R_{f}Y (Ill. C, 2 deg.): | | 1 to 7% | 1 to 6% |
| | a*_{f} (Ill. C, 2°): | -5.0 to 5.0 | -4.0 to 3.0 |
| | b*_{f} (Ill. C, 2°): | -9.0 to 10.0 | -7.0 to 8.0 |
| SHGC: | | <= 0.49 | <= 0.45 |
| SC: | | <= 0.56 | <= 0.53 |
| Tᵤₗₜᵣₐᵥᵢₒₗₑₜ: | | <= 50% | <= 45% |
| T_{UV damage weighted}: | | <= 0.50 | <= 0.48 |
| Sheet Resistance (Rₛ): | | <= 8 ohms/sq. | <= 5 ohms/sq. |

Meanwhile, IG window units utilizing coatings 27 according to certain embodiments of this invention as shown in Fig. 2, have the following solar characteristics (e.g., where the coated glass substrate 1 is a clear soda lime silica glass substrate from 2 to 7 mm thick, and the other soda lime silica glass substrate 31 is clear and from 2 to 7 mm thick, absent any significant heat treatment). In Table 5 below, R_{g}Y is visible reflection from the outside or exterior of the window (i.e., from where the sun is located in Fig. 2), and R_{f}Y is visible reflection from the interior side (e.g., from within the building interior), and the a*, b* values under these respective reflection parameters also correspond to glass (g) side (i.e., from outside the window in Fig. 2) and film (f) side (i.e., from interior the window in Fig. 2). It is noted that the characteristics in Table 5 below are measured in the context of an IG unit, except that the Δa* values are measured monolithically, before the monolithic article is assembled in the IG unit.

**Table 5: IG Unit Solar Characteristics**

| Characteristic | | General | More Preferred |
|---|---|---|---|
| Tᵥᵢₛ (or TY)(Ill. C, 2 deg.): | | >= 65% | >= 67% |
| | a*ₜ (Ill. C, 2°): | -7.0 to 0.0 | -5 to -1.5 |
| | b*ₜ (Ill. C, 2°): | -2.0 to 4.0 | 1.0 to 3.0 |
| R_{g}Y (Ill. C, 2 deg.): | | 7 to 13% | 9 to 11% |
| | a*_{g} (Ill. C, 2°): | -3.0 to 2.0 | -2.0 to 0.5 |
| | b*_{g} (Ill. C, 2°): | -5.0 to 1.0 | -4.0 to -1.0 |
| | Δa*_{g} (0 to 45° VA): | <= 2.0 | <= 1.5 |
| | Δa*_{g} (0 to 60° VA): | <= 2.5 | <= 1.5 |
| R_{f}Y (Ill. C, 2 deg.): | | 7 to 14% | 10 to 12% |
| | a*_{f} (Ill. C, 2°): | -4.0 to 2.0 | -2.5 to 0.5 |
| | b*_{f} (Ill. C, 2°): | -5.0 to 5.0 | -4.0 to 3.0 |
| SHGC: | | <= 0.45 | <= 0.40 |
| SC: | | <= 0.49 | <= 0.46 |
| U-value: | | 0.20 to 0.30 | 0.22 to 0.25 |
| Tᵤₗₜᵣₐᵥᵢₒₗₑₜ: | | <= 45% | <= 40% |
| T_{UV damage weighted}: | | <= 0.45 | <= 0.39 |

moreover, it is noted that a diamond-like carbon (DLC) inclusive layer may be provided over coating 27 in certain example embodiments of this invention.

### EXAMPLES

The following examples are provided for purposes of example only, and are not intended to be limiting. Example processing techniques used for sputtering the Example coatings may be found in related U.S. 6, 936, 347 (Serial No. 09/978,184.) Each of the following Examples was made via sputtering so as to have approximately the layer stack set forth below, from the glass substrate outwardly. The listed thicknesses are approximations:

**TABLE 6: LAYER STACK FOR EXAMPLES 1-2**

| Layer | Thickness |
|---|---|
| Glass Substrate | 6 mm |
| TiO₂ | 9-9,5 nm (90-95 Å) |
| ZnOₓ | 10 nm (100 Å) |
| Ag | 9,5-9,7 nm (95-97 Å) |
| NiCrOₓ | 3 nm (30 Å) |
| SnO₂ | 56-59 nm (560-590 Å) |
| ZnOₓ | 12 nm (120 Å) |
| Ag | 13,5-15 nm (35-150 Å) |
| NiCrOₓ | 3 nm (30 Å) |
| SnO₂ | 10 nm (100 Å) |
| Si₃N₄ | 18.5-20 nm (185-200 Å) |

It can be seen that the coating(s) set forth above include a titanium oxide layer significantly thinner than that of the comparative coating discussed in the Background. It is believed that this thinner titanium oxide layer is a significant factor in achieving the low Δa* values discussed herein upon VA change. It is also believed that making the upper Ag layer significantly thicker (e.g., at least 5% thicker, more preferably at least 10% thicker, and most preferably at least 25% thicker) than the lower Ag layer helps stabilize a* values upon viewing angle change. After the coatings were formed, each of the Example coated articles was analyzed monolithically, the results being set forth in Table 7 below. The visible characteristics set forth below in Table 7 were measured in accordance with Ill. C, 2 degree observer, which is known in the art.

**Table 7: Optical Characteristics of Examples 1-2 (Monolithic)**

| | Example 1 | Example 2 |
|---|---|---|
| Visible Transmission (Y)(Ill. C 2 deg.): | 75.68% | 75.09% |
| a* | -3.42 | -3.82 |
| b* | 1.67 | 1.56 |
| Glass Side Reflective (RY)(Ill C, 2 deg.): | 5.49% | 5.54% |
| a* | 0.54 | 0.29 |
| b* | -5.56 | -5.53 |
| Film Side Reflective (FY)(Ill. C, 2 deg.): | 4.38 | 4.43 |
| a* | -5.57 | -3.07 |
| b* | 6.86 | 7.03 |
| Sheet Resistance (Rₛ)(ohms/square): | 2.37 | 2.21 |

The Examples were also analyzed at different viewing angles using a Perkin Elmer Lambda 900 in order to determine color shift due to viewing angle change. The results are set forth below in Tables 8-9. It is noted that in Tables 8-9, as everywhere herein, the 0 degree viewing angle may be truly 0 or alternatively may be approximately 0 such as 2 deg. observer.

**Table 8: Color Shift Characteristics of Example 1 (Monolithic)**

| Color Characteristic | | 0 deg. VA | 45 deg. VA | 60 deg. VA |
|---|---|---|---|---|
| Glass Side Reflective Color | | | | |
| | a* | 0.54 | 0.76 | -0.36 |
| | b* | -5.56 | -1.75 | 1.06 |
| | Δa*_{g} | n/a | 0.22 | 0.90 |

**Table 9: Color Shift Characteristics of Example 2 (Monolithic)**

| Color Characteristic | | 0 deg. VA | 45 deg. VA | 60 deg. VA |
|---|---|---|---|---|
| Glass Side Reflective Color | | | | |
| | a* | 0.29 | 1.44 | 0.42 |
| | b* | -5.53 | -0.57 | -0.55 |
| | Δa*_{g} | n/a | 1.15 | 0.13 |

These Δa* values, upon viewing angle change, are improvements over the comparative coating discussed above in the Background Section. After such Example coated articles are made, they may be used in the context of IG window units. It will be appreciated by those skilled in the art that the low Δa*_{g} values upon the aforesaid viewing angle (VA) changes achieved by thinning the titanium oxide layer (and possibly adjusting the Ag thicknesses) are surprising improvements in the art.

Fig. 3 is a graph plotting the a*, b* color values of Examples 1-2 above, compared to the conventional coated article described in the Background. It can be seen from Fig. 3 that the conventional coated article (with thicker titanium oxide layer) experiences a much more drastic a* shift with the change in viewing angle than do Examples 1-2. Moreover, and perhaps just as important if not more important, it can be seen that Examples 1-2 have a much more neutral color (a*, b* closer to zero) than does the conventional coated article at the 60 degree VA. Such neutral coloration at high viewing angles may be especially helpful in (1) approximately matching HT counterpart coatings, and/or (2) reducing strong coloration upon viewing angle change.

Terms used herein are known in the art. For example, intensity of reflected visible wavelength light, i.e. "reflectance" is defined by its percentage and is reported as Rₓ Y or Rₓ (i.e. the Y value cited below in ASTM E-308-85), wherein "X" is either "G" for glass side or "F" for film side. Herein, RY means glass side reflective reflectance and FY means film side reflectance. "Glass side" (e.g. "G") means, as viewed from the side of the glass substrate opposite that on which the coating resides, while "film side" (i.e. "F") means, as viewed from the side of the glass substrate on which the coating resides.

Color characteristics are measured and reported herein using the CIE LAB a*, b* coordinates and scale (i.e. the CIE a*b* diagram, Ill. CIE-C, 2 degree observer). Other similar coordinates may be equivalently used such as by the subscript "h" to signify the conventional use of the Hunter Lab Scale, or Ill. CIE-C, 10° observer, or the CIE LUV u*v* coordinates. These scales are defined herein according to ASTM D-2244-93 "Standard Test Method for Calculation of Color Differences From Instrumentally Measured Color Coordinates" 9/15/93 as augmented by ASTM E-308-85, Annual Book of ASTM Standards, Vol. 06.01 "Standard Method for Computing the Colors of Objects by 10 Using the CIE System" and/or as reported in IES LIGHTING HANDBOOK 1981 Reference Volume.

The term "shading coefficient" (SC) is a term well understood in the art and is used herein according to its well known meaning. It is determined according to ASHRAE Standard 142 "Standard Method for Determining and Expressing the Heat Transfer and Total Optical Properties of Fenestration Products" by ASHRAE Standards Project Committee, SPC 142, September 1995. SC may be obtained by dividing solar heat gain coefficient (SHGC) by about 0.87. Thus, the following formula may be used: SC=SHGC/0.87.

While the invention has been described in connection with what is presently considered to be the most practical and preferred embodiment, it is to be understood that the invention is not to be limited to the disclosed embodiment, but on the contrary, is intended to cover various modifications and equivalent arrangements included within the scope of the appended claims.

## Claims

1. A coated article including a coating or layer system supported by a glass substrate, the coating (27) or layer system comprising from the glass substrate (1) outwardly:
a) a titanium oxide inclusive layer (3);
b) a zinc oxide inclusive contact layer(7), contacting the silver layer c);
c) a silver inclusive layer (9) contacting the zinc oxide inclusive layer (7) b);
d) a nickel chrome oxide inclusive layer (11) contacting the silver inclusive layer c); and
e) a tin oxide inclusive layer (13);
f) a zinc oxide inclusive layer (17);
g) a silver inclusive layer (19);
h) a nickel chrome oxide inclusive layer (21); and
i) a silicon nitride inclusive layer (25);
wherein the coated article has a sheet resistance (Rₛ) of no greater than 5,0 ohms/square, and wherein the coated article has a Δa*g (glass side reflective) value, measured monolithically, of no greater than 3,0 over a viewing angle shift of about 60 degrees; and wherein the titanium oxide inclusive layer (3) has a thickness of from 4 to 15 nm, wherein the coated article is not tempered or heat bent.

2. The coated article of claim 1, wherein the coated article has a Δa*g (glass side reflective) value, measured monolithically, of no greater than 1,5 over a viewing angle shift of about 60 degrees.

3. The coated article of claim 1, wherein the coated article has a Δa*_{g} (glass side reflective) value, measured monolithically, of no greater than 1,0 over a viewing angle shift of about 60 degrees.

4. The coated article of claim 1, wherein the second layer comprising silver (19) is at least 10% thicker than the first layer comprising silver (9).

5. The coated article of claim 1, wherein the second layer comprising silver (19) is at least 25% thicker than the first layer comprising silver (9).

6. The coated article of claim 1, wherein the layer comprising titanium oxide (3) directly contacts the glass substrate (1).

## Patentansprüche

1. Beschichteter Gegenstand, der eine Beschichtung oder ein Schichtsystem umfasst, das von einem Glassubstrat getragen wird, wobei die Beschichtung (27) oder das Schichtsystem, ausgehend vom Glassubstrat (1) nach außen, umfasst:
a) eine Titanoxid beinhaltende Schicht (3);
b) eine Zinkoxid beinhaltende Kontaktschicht (7) in Kontakt mit der Silberschicht c);
c) eine Silber beinhaltende Schicht (9) in Kontakt mit der Zinkoxid beinhaltenden Schicht (7) b);
d) eine Nickelchromoxid beinhaltende Schicht (11) in Kontakt mit der Silber beinhaltenden Schicht c); und
e) eine Zinnoxid beinhaltende Schicht (13);
f) eine Zinkoxid beinhaltende Schicht (17);
g) eine Silber beinhaltende Schicht (19);
h) eine Nickelchromoxid beinhaltende Schicht (21); und
i) eine Siliciumnitrid beinhaltende Schicht (25);
wobei der beschichtete Gegenstand einen Flächenwiderstand (Rₛ) von nicht mehr als 5,0 Ohm/Quadrat aufweist, und wobei der beschichtete Gegenstand einen Aa*_{g}-Wert (glasseitigen Reflexionswert), monolithisch gemessen, von nicht mehr als 3,0 über eine Sichtwinkelverschiebung von ungefähr 60 Grad, aufweist; und wobei die Titanoxid beinhaltende Schicht (3) eine Dicke von 4 bis 15 nm aufweist, wobei der beschichtete Gegenstand nicht vergütet oder wärmedeformiert ist.

2. Beschichteter Gegenstand nach Anspruchl, wobei der beschichtete Gegenstand einen Aa*_{g}-Wert (glasseitigen Reflexionswert), monolithisch gemessen, von nicht mehr als 1,5 über eine Sichtwinkelverschiebung von ungefähr 60 Grad, aufweist.

3. Beschichteter Gegenstand nach Anspruch1, wobei der beschichtete Gegenstand einen Aa*_{g}-Wert (glasseitigen Reflexionswert), monolithisch gemessen, von nicht mehr als 1,0 über eine Sichtwinkelverschiebung von ungefähr 60 Grad, aufweist.

4. Beschichter Gegenstand nach Anspruch 1, wobei die zweite Silber umfassende Schicht (19) mindestens 10 % dicker als die erste Silber umfassende Schicht (9) ist.

5. Beschichter Gegenstand nach Anspruch 1, wobei die zweite Silber umfassende Schicht (19) mindestens 25 % dicker als die erste Silber umfassende Schicht (9) ist.

6. Beschichteter Gegenstand nach Anspruch 1, wobei die Titanoxid umfassende Schicht (3) direkt mit dem Glassubstrat (1) in Kontakt ist.

## Revendications

1. Article revêtu comprenant un revêtement ou un système de couches supporté par un substrat de verre, le revêtement (27) ou système de couches comprenant, du substrat de verre (1) vers l'extérieur :
a) une couche incluant de l'oxyde de titane (3) ;
b) une couche de contact incluant de l'oxyde de zinc (7) venant en contact avec la couche d'argent c) ;
c) une couche incluant de l'argent (9) venant en contact avec la couche incluant de l'oxyde de zinc (7) b) ;
d) une couche incluant de l'oxyde de nickel-chrome (11) venant en contact avec la couche incluant de l'argent c) ; et
e) une couche incluant de l'oxyde d'étain (13) ;
f) une couche incluant de l'oxyde de zinc (17) ;
g) une couche incluant de l'argent (19) ;
h) une couche incluant de l'oxyde de nickel-chrome (21) ; et
i) une couche incluant du nitrure de silicium (25) ;
dans lequel l'article revêtu présente une résistivité en couche (Rₛ) non supérieure à 5,0 ohms/carré, et dans lequel l'article revêtu présente une valeur Δa*_{g} (en réflexion côté verre), mesurée monolithiquement, non supérieure à 3,0 sur un décalage angulaire de visualisation d'environ 60 degrés ; et dans lequel la couche incluant de l'oxyde de titane (3) présente une épaisseur comprise entre 4 et 15 nm, dans lequel l'article revêtu n'est pas trempé ou cintré thermiquement.

2. Article revêtu selon la revendication 1, dans lequel l'article revêtu présente une valeur Δa*_{g}(en réflexion côté verre), mesurée monolithiquement, non supérieure à 1,5 sur un décalage angulaire de visualisation d'environ 60 degrés.

3. Article revêtu selon la revendication 1, dans lequel l'article revêtu présente une valeur Δa*_{g}(en réflexion côté verre), mesurée monolithiquement, non supérieure à 1,0 sur un décalage angulaire de visualisation d'environ 60 degrés.

4. Article revêtu selon la revendication 1, dans lequel la seconde couche comprenant de l'argent (19) est au moins 10 % plus épaisse que la première couche comprenant de l'argent (9).

5. Article revêtu selon la revendication 1, dans lequel la seconde couche comprenant de l'argent (19) est au moins 25 % plus épaisse que la première couche comprenant de l'argent (9).

6. Article revêtu selon la revendication 1, dans lequel la couche comprenant de l'oxyde de titane (3) est en contact direct avec le substrat de verre (1).
